# EUROPEAN PATENT SPECIFICATION

(11) **EP 3 058 292 B1**
(45) Date of publication and mention of the grant of the patent: **27.01.2021**
(21) Application number: 14789739.1
(22) Date of filing: 15.10.2014
(51) Int. Cl.: F25D 17/06, F25D 11/00, B60P 3/20, B60H 1/32, F25D 23/06, F25B 27/02, F02B 63/06

(54) **AIR INTAKE FOR REFRIGERATED CONTAINER ASSEMBLY**
LUFTEINLASS FÜR EINE GEKÜHLTE BEHÄLTERANORDNUNG
ADMISSION D'AIR POUR ENSEMBLE CONTENEUR RÉFRIGÉRÉ

(30) Priority: 17.10.2013 US 201361892223 P
(43) Date of publication of application: 24.08.2016
(73) Proprietor: Carrier Corporation, Farmington, CT 06034 (US)
(72) Inventor: CASASANTA, James, Syracuse, New York 13221 (US); SAROKA, Mary D., Syracuse, New York 13221 (US)
(74) Representative: Dehns
(86) International application number: PCT/US2014/060596
(87) International publication number: WO 2015/057776

(56) References cited:
- EP-A1- 2 157 386
- WO-A1-2009/028190
- JP-A- 2010 255 909
- JP-A- 2013 040 732
- US-A- 1 352 533
- US-A- 2 195 389
- US-A- 2 694 553
- US-A1- 2005 072 169

## Description

### BACKGROUND OF THE INVENTION

The subject matter disclosed herein relates to refrigeration systems. More specifically, the subject matter disclosed herein relates to refrigeration of containers utilized to store and ship cargo.

A typical refrigerated cargo container or refrigerated truck trailer, such as those utilized to transport a cargo via sea, rail or road, is a container modified to include a refrigeration unit located at one end of the container. The refrigeration unit includes a compressor, condenser, expansion valve and evaporator serially connected by refrigerant lines in a closed refrigerant circuit in accord with known refrigerant vapor compression cycles. A power unit, including an engine, drives the compressor of the refrigeration unit, and is typically diesel powered, or in other applications natural gas powered. In many truck/trailer transport refrigeration systems, the compressor is driven by the engine shaft either through a belt drive or by a mechanical shaft-to-shaft link. In other systems, the engine drives a generator that generates electrical power, which in turn drives the compressor.

Typically, air intakes for the refrigeration unit engine are located directly below the refrigeration unit. The air intakes are constructed of molded rubber or rubber-like materials that are costly to manufacture, which are then assembled to the container. Hoses are fitted to the air intakes to convey the air from the air intakes to the engine. While such a position of the air intakes is good for preventing water ingress into the air intakes, the air flowed into the intake can have an undesired high temperature, when compared to air flowing along the side of the container or over the top of the container. The air at the bottom of the container is typically warmer due to radiant and convective heating from the pavement and from the tractor engine. Additionally, the intake air may be inadvertently heated by being routed past the refrigeration unit condenser, and the heated air flowing off of the condenser.

US 2195389 A discloses a refrigerated transportation cargo container comprising: a transportation cargo container; a refrigeration unit disposed at an end of the transportation cargo container to provide a flow of supply air for the transportation cargo container, the refrigeration unit including: a compressor; an engine operably connected to the compressor to drive the compressor; an engine air intake at a wall of the cargo container to intake engine air from outside the cargo container; and an air channel extending from the engine air intake to the engine.

WO 2009/028190 A1 discloses a refrigerated transportation cargo container comprising: a transportation cargo container; a refrigeration unit disposed at an end of the transportation cargo container to provide a flow of supply air for the transportation cargo container, the refrigeration unit including: a compressor; an engine operably connected to the compressor to drive the compressor; an engine air intake to intake engine air from outside the cargo container; and an air channel extending from the engine air intake past an evaporator of the refrigeration unit to the engine.

### BRIEF DESCRIPTION OF THE INVENTION

In one embodiment, there is provided a refrigerated transportation cargo container as defined in claim 1, comprising: a transportation cargo container; a refrigeration unit disposed at an end of the transportation cargo container to provide a flow of supply air for the transportation cargo container, the refrigeration unit including: a compressor; an engine operably connected to the compressor to drive the compressor; an engine air intake to intake engine air from outside the cargo container; and an air channel extending from the engine air intake past an evaporator of the refrigeration unit to the engine, characterised in that the engine air intake is at a top wall of the cargo container, in that the air channel is located between an inner panel and a front wall of the cargo container, the inner panel being secured to the front wall of the cargo container, and in that the evaporator is located between the inner panel and the front wall of the cargo container.

In another embodiment, there is provided a method of operating a refrigeration unit for a refrigerated transportation cargo container as defined in claim 5, comprising: operably connecting an engine to a compressor of the refrigeration unit; locating an engine air intake at a wall of the cargo container; and directing a flow of engine intake air downwardly from outside of the cargo container, and through the engine air intake past an evaporator of the refrigeration unit to the engine, thereby providing the flow of engine air for engine operation, characterised in that the engine air intake is at a top wall of the cargo container, and by directing the intake air from the top wall of the cargo container to the engine via an airflow passage defined between a front wall of the cargo container and an inner panel of the cargo container, the inner panel being secured to the front wall of the cargo container, and in that the evaporator is located between the inner panel and the front wall of the cargo container.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic illustration of an embodiment of a refrigerated transportation cargo container;
FIG. 2 is a schematic illustration of an embodiment of a refrigeration unit for a refrigerated transportation cargo container;
FIG. 3 is a cross-sectional view of an embodiment of an engine air passage for a refrigeration unit of a refrigerated transportation cargo container;
FIG. 4 is another cross-sectional view of an embodiment of an engine air passage for a refrigeration unit of a refrigerated transportation cargo container;
FIG. 5 is a cross-sectional view of an example of an engine air passage for a refrigeration unit of a refrigerated transportation cargo container that is not the subject of the present invention; and
FIG. 6 is a cross-sectional view of yet another embodiment of an engine air passage for a refrigeration unit of a refrigerated transportation cargo container.
The detailed description explains embodiments of the invention, together with advantages and features, by way of example with reference to the drawing.

### DETAILED DESCRIPTION OF THE INVENTION

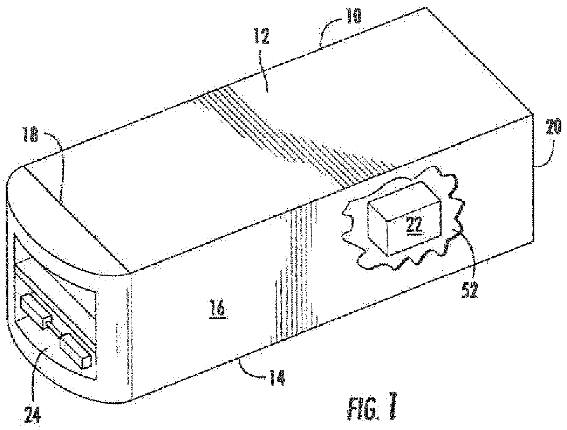

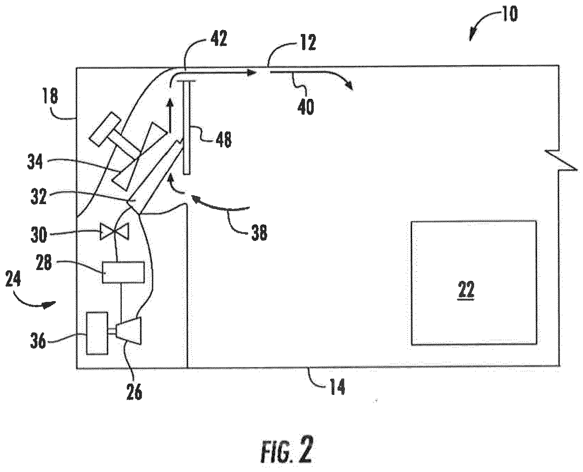

Shown in FIG. 1 is an embodiment of a refrigerated cargo container 10. The cargo container 10 is formed into a generally rectangular construction, with a top wall 12, a directly opposed bottom wall 14, opposed side walls 16 and a front wall 18. The cargo container 10 further includes a door or doors (not shown) at a rear wall 20, opposite the front wall 18. The cargo container 10 is configured to maintain a cargo 22 located inside the cargo container 10 at a selected temperature through the use of a refrigeration unit 24 located at the container 10. The cargo container 10 is mobile and is utilized to transport the cargo 22 via, for example, a truck, a train or a ship. The refrigeration unit 24 is located at the front wall 18, and includes a compressor 26, a condenser 28, an expansion valve 30, an evaporator 32 and an evaporator fan 34 (shown in FIG. 2).The compressor 26 is operably connected to an engine 36 which drives the compressor 26. In some embodiments, the engine 36 is diesel powered. In other embodiments, the engine is powered by another fuel such as natural gas. Further, the engine is connected to the compressor in one of several ways, such as a direct shaft drive, a belt drive, one or more clutches, or via an electrical generator. Referring to FIG. 2, return airflow 38 flows into the refrigeration unit 24 from the cargo container 10 through a refrigeration unit inlet 60, and across the evaporator 32 via the evaporator fan 34, thus cooling the return airflow 38 to a selected temperature. The cooled return airflow 38, now referred to as supply airflow 40 is then supplied into the container 10 through a refrigeration unit outlet 42, which in some embodiments is located near the top wall 12 of the cargo container 10. The supply air 40 cools the cargo 22 in the cargo container 10. It is to be appreciated that the refrigeration unit 24 can further be operated in reverse to warm the cargo container 10 when, for example, the outside temperature is very low.

The evaporator 32 and evaporator fan 34 are segregated from the remaining components by an inner panel, or POD 48 to reduce undesired heating of the evaporator 32 and return airflow 38 by radiant heat from, for example, the condenser 28 and the engine 36. The POD 48 is formed from, for example, a sheet metal forming or molding process and is secured to the front wall 18 of the container 10.

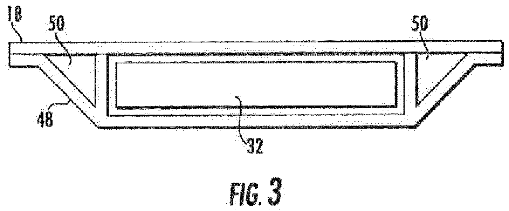

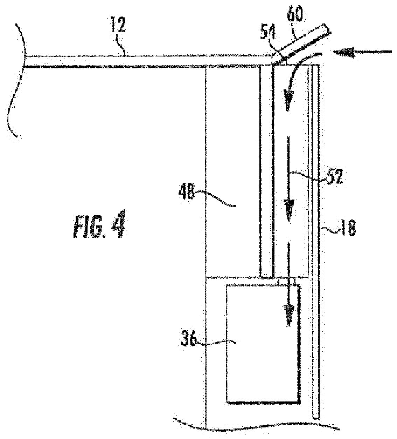

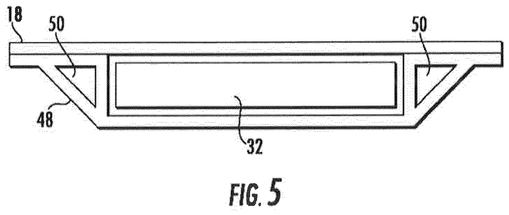

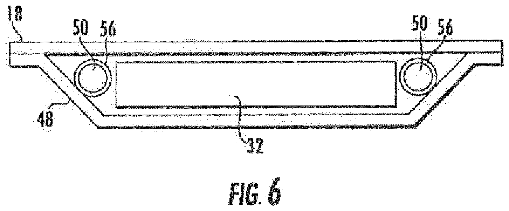

Referring now to FIG. 3, an airflow channel 50 is formed between the POD 48 and the front wall 18 of the container 10, laterally adjacent to the evaporator 32. Referring now to FIG. 4, an air intake 54 located at the top wall 12 of the cargo container directs engine intake air 52 from outside the cargo container 10 into the airflow channel 50 and toward the engine 36 for operation thereof. The airflow channel 50 is in the form of a passage bounded by the POD 48 and the front wall 18. In an example that is not the subject of the present invention, the airflow channel 50 is a tubular structure formed in the POD 48, as shown in FIG. 5. Further, as shown in FIG. 6, a tube 56 may be extended through the airflow channel 50 to direct the intake air 52 to the engine 36. In some embodiments, the POD 48 includes a feature to prevent water from entering the air intake 54, such as an extension 60 angled over the air intake opening such as shown in FIG. 4 to prevent water ingress into the air intake 54, while still allowing sufficient airflow into the air intake 54. Alternatively or additionally, other elements, such as an air/water separator (not shown) may be positioned in the airflow channel 50 to separate water from the intake air 52 before the intake air reaches the engine 36.

Positioning the air intake 54 at the top wall 12 of the container 10 and utilizing the POD 48 to direct the intake air 52 toward the engine 36 has numerous advantages over refrigeration units 24 with air intakes at a bottom wall of the container. Further, in some embodiments, flowing the intake air 52 via the POD 48 past the evaporator 32 results in cooling of the intake air 52. The resulting intake air 52 is cleaner and cooler than that from the bottom wall, as there is reduced radiant and convective heating of the intake air 52. Further, by utilizing the airflow channel 50 formed by the POD 48, a length of hose necessary to direct the intake air 52 into the engine is reduced or eliminated, thereby reducing cost and complexity. Further, the cleaner and cooler intake air 52 improves engine 36 performance, especially given the trend toward downsizing and/or turbocharging engines for container use to improve fuel efficiency.

The invention is not to be seen as limited by the foregoing description, but is only limited by the scope of the appended claims.

## Claims

1. A refrigerated transportation cargo container comprising:
a transportation cargo container (10);
a refrigeration unit (24) disposed at an end of the transportation cargo container (10) to provide a flow of supply air for the transportation cargo container (10), the refrigeration unit (24) including:
a compressor (26);
an engine (36) operably connected to the compressor (26) to drive the compressor (26);
an engine air intake (54) to intake engine air from outside the cargo container (10); and
an air channel (50) extending from the engine air intake (54) past an evaporator (32) of the refrigeration unit (24) to the engine (36),
wherein the air channel (50) is located between an inner panel (48) and a front wall (18) of the cargo container (10), the inner panel (48) being secured to the front wall (18) of the cargo container (10);
**characterised in that** the engine air intake (54) is at a top wall (12) of the cargo container (10), and **in that** the evaporator (32) is located between the inner panel (48) and the front wall (18) of the cargo container (10).

2. The refrigerated transportation cargo container of Claim 1, further comprising a tubular member (56) extended between the inner panel (48) and the front wall (18).

3. The refrigerated transportation cargo container of Claim 1, wherein the inner panel (48) separates the evaporator (32) of the refrigeration unit (24) from the engine (36).

4. The refrigerated transportation cargo container of Claim 1, wherein the engine (36) is a diesel-powered or natural gas-powered engine.

5. A method of operating a refrigeration unit (24) for a refrigerated transportation cargo container (10) comprising:
operably connecting an engine (36) to a compressor (26) of the refrigeration unit (24);
locating an engine air intake (54) at a wall (12) of the cargo container (10); and
directing a flow of engine intake air (52) downwardly from outside of the cargo container (10), and through the engine air intake (54) past an evaporator (32) of the refrigeration unit (24) to the engine (36), thereby providing the flow of engine air for engine operation,
wherein the intake air (52) is directed to the engine (36) via an airflow passage (50) defined between a front wall (18) of the cargo container (10) and an inner panel (48) of the cargo container (10), the inner panel (48) being secured to the front wall (18) of the cargo container (10);
**characterised in that** the engine air intake (54) is at a top wall (12) of the cargo container (10), and **in that** the evaporator (32) is located between the inner panel (48) and the front wall (18) of the cargo container (10).

6. The method of Claim 5, further comprising directing the engine intake air (52) to the engine (36) via a tubular member (56) disposed in the airflow passage (50).

7. The method of Claim 5, further comprising separating the evaporator (32) of the refrigeration unit (24) from the engine (36) via the inner panel (48) of the cargo container (10).

8. The method of Claim 5, wherein the engine (36) is a diesel-powered or natural gas-powered engine.

## Patentansprüche

1. Gekühlter Transportfrachtbehälter, umfassend:
einen Transportfrachtbehälter (10);
eine Kühlungseinheit (24), die an einem Ende des Transportfrachtbehälters (10) angeordnet ist, um einen Strom von Zuluft für den Transportfrachtbehälter (10) bereitzustellen, wobei die Kühlungseinheit (24) beinhaltet:
einen Kompressor (26);
einen Motor (36), der betriebsfähig mit dem Kompressor (26) verbunden ist, um den Kompressor (26) anzutreiben;
eine Motorluftansaugung (54), um Motorluft von außerhalb des Frachtbehälters (10) anzusaugen; und
einen Luftkanal (50), der sich von der Motorluftansaugung (54) an einem Verdampfer (32) der Kühlungseinheit (24) vorbei zu dem Motor (36) erstreckt, wobei der Luftkanal (50) zwischen einem Innenpanel (48) und einer Vorderwand (18) des Frachtbehälters (10) liegt, wobei das Innenpanel (48) an der Vorderwand (18) des Frachtbehälters (10) befestigt ist;
**dadurch gekennzeichnet, dass** die Motorluftansaugung (54) bei einer Oberseitenwand (12) des Frachtbehälters (10) ist und dadurch, dass der Verdampfer (32) zwischen dem Innenpanel (48) und der Vorderwand (18) des Frachtbehälters (10) liegt.

2. Gekühlter Transportfrachtbehälter nach Anspruch 1, weiter umfassend ein Röhrenbauteil (56), das sich zwischen dem Innenpanel (48) und der Vorderwand (18) erstreckt.

3. Gekühlter Transportfrachtbehälter nach Anspruch 1, wobei das Innenpanel (48) den Verdampfer (32) der Kühlungseinheit (24) von dem Motor (36) trennt.

4. Gekühlter Transportfrachtbehälter nach Anspruch 1, wobei der Motor (36) ein dieselbetriebener oder erdgasbetriebener Motor ist.

5. Verfahren zum Betreiben einer Kühlungseinheit (24) für einen gekühlten Transportfrachtbehälter (10), umfassend:
betriebsfähiges Verbinden eines Motors (36) mit einem Kompressor (26) der Kühlungseinheit (24);
Positionieren einer Motorluftansaugung (54) bei einer Wand (12) des Frachtbehälters (10); und
Leiten eines Stroms von Motoransaugluft (52) von außerhalb des Frachtbehälters (10) nach unten und durch die Motorluftansaugung (54), an einem Verdampfer (32) der Kühlungseinheit (24) des Motors (36) vorbei, wodurch der Strom von Motorluft für Motorbetrieb bereitgestellt wird, wobei die Ansaugluft (52) mittels eines Luftstromdurchlasses (50), der zwischen einer Vorderwand (18) des Frachtbehälters (10) und einem Innenpanel (48) des Frachtbehälters (10) definiert ist, zu dem Motor (36) geleitet wird, wobei das Innenpanel an der Vorderwand (18) des Frachtbehälters (10) befestigt ist;
**dadurch gekennzeichnet, dass** die Motorluftansaugung (54) bei einer Oberseitenwand (12) des Frachtbehälters (10) ist und dadurch, dass der Verdampfer (32) zwischen dem Innenpanel (48) und der Vorderwand (18) des Frachtbehälters (10) liegt.

6. Verfahren nach Anspruch 5, weiter umfassend Leiten der Motoransaugluft (52) über ein Röhrenbauteil (56), das in dem Luftstromdurchlass (50) angeordnet ist, zu dem Motor (36).

7. Verfahren nach Anspruch 5, weiter umfassend Trennen des Verdampfers (32) der Kühlungseinheit (24) mittels des Innenpanels (48) des Frachtbehälters (10) von dem Motor (36).

8. Verfahren nach Anspruch 5, wobei der Motor (36) ein dieselbetriebener oder erdgasbetriebener Motor ist.

## Revendications

1. Conteneur de fret de transport réfrigéré comprenant :
un conteneur de fret de transport (10) ;
une unité de réfrigération (24) disposée à une extrémité du conteneur de fret de transport (10) pour fournir un flux d'air d'alimentation pour le conteneur de fret de transport (10), l'unité de réfrigération (24) incluant :
un compresseur (26) ;
un moteur (36) relié de manière fonctionnelle au compresseur (26) pour entraîner le compresseur (26) ;
une admission d'air de moteur (54) pour faire entrer de l'air de moteur depuis l'extérieur du conteneur de fret (10) ; et
un canal d'air (50) s'étendant de l'admission d'air de moteur (54) dépassant un évaporateur (32) de l'unité de réfrigération (24) jusqu'au moteur (36),
dans lequel le canal d'air (50) est situé entre un panneau intérieur (48) et une paroi avant (18) du conteneur de fret (10), le panneau intérieur (48) étant fixé à la paroi avant (18) du conteneur de fret (10) ;
**caractérisé en ce que** l'admission d'air de moteur (54) est au niveau d'une paroi supérieure (12) du conteneur de fret (10) et **en ce que** l'évaporateur (32) est situé entre le panneau intérieur (48) et la paroi avant (18) du conteneur de fret (10).

2. Conteneur de fret de transport réfrigéré selon la revendication 1, comprenant en outre un élément tubulaire (56) s'étendant entre le panneau intérieur (48) et la paroi avant (18).

3. Conteneur de fret de transport réfrigéré selon la revendication 1, dans lequel le panneau intérieur (48) sépare l'évaporateur (32) de l'unité de réfrigération (24) du moteur (36).

4. Conteneur de fret de transport réfrigéré selon la revendication 1, dans lequel le moteur (36) est un moteur diesel ou au gaz naturel.

5. Procédé de fonctionnement d'une unité de réfrigération (24) pour un conteneur de fret de transport réfrigéré (10) comprenant :
la connexion de manière fonctionnelle d'un moteur (36) à un compresseur (26) de l'unité de réfrigération (24) ;
le positionnement d'une admission d'air de moteur (54) au niveau d'une paroi (12) du conteneur de fret (10) ; et
la direction d'un flux d'air d'entrée de moteur (52) vers le bas depuis l'extérieur du conteneur de fret (10), et à travers l'admission d'air de moteur (54) dépassant un évaporateur (32) de l'unité de réfrigération (24) jusqu'au moteur (36), fournissant ainsi le flux d'air de moteur pour le fonctionnement du moteur,
dans lequel l'air d'entrée (52) est dirigé vers le moteur (36) par le biais d'un passage de flux d'air (50) défini entre une paroi avant (18) du conteneur de fret (10) et un panneau intérieur (48) du conteneur de fret (10), le panneau intérieur (48) étant fixé à la paroi avant (18) du conteneur de fret (10) ;
**caractérisé en ce que** l'admission d'air de moteur (54) est au niveau d'une paroi supérieure (12) du conteneur de fret (10) et **en ce que** l'évaporateur (32) est situé entre le panneau intérieur (48) et la paroi avant (18) du conteneur de fret (10).

6. Procédé selon la revendication 5, comprenant en outre la direction de l'air d'entrée de moteur (52) vers le moteur (36) par le biais d'un élément tubulaire (56) disposé dans le passage de flux d'air (50).

7. Procédé selon la revendication 5, comprenant en outre la séparation de l'évaporateur (32) de l'unité de réfrigération (24) du moteur (36) par le biais du panneau intérieur (48) du conteneur de fret (10).

8. Procédé selon la revendication 5, dans lequel le moteur (36) est un moteur diesel ou au gaz naturel.
